Europäisches Patentamt

European Patent Office

Office européen des brevets

(11) Publication number: 0 400 599 A2

# EUROPEAN PATENT APPLICATION

(21) Application number: 90110254.1

(22) Date of filing: 30.05.90

(51) Int. Cl.⁵: **B32B 3/12, B32B 15/08, B32B 31/20**

(30) Priority: 30.05.89 US 359081

(43) Date of publication of application:
05.12.90 Bulletin 90/49

(84) Designated Contracting States:
AT BE CH DE ES FR GB IT LI NL

(71) Applicant: PHILLIPS PETROLEUM COMPANY
5th and Keeler
Bartlesville Oklahoma 74004(US)

(72) Inventor: O'Connor, James Edward
5908 Martin Place
Bartlesville, OK 74006(US)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
D-8000 München 86(DE)

(54) Composite cellular sandwich structure.

(57) A composite cellular sandwich structure. The structure comprises a cellular core with at least one thermoplastic composite layer disposed adjacent to a side of the core and heat bonded thereto. To facilitate bonding, a film of thermoplastic may be disposed between the composite layer and the core. Preferably, the thermoplastic material in both the composite layer and the film is a polyarylene sulfide, such as polyphenylene sulfide. No secondary adhesive is required in the bonding process. A method of substantially continuously producing the composite cellular sandwich structure is also disclosed.

FIG. 1

## COMPOSITE CELLULAR SANDWICH STRUCTURE

### Background Of The Invention

#### 1. Field Of The Invention

This invention relates to composite sandwich structures having a cellular core, and more particularly, to such a structure with a fiber reinforced thermoplastic which is heat bonded to the cellular core.

#### 2. Description Of The Prior Art

There are many types of cellular structural members which are known in the art and useful for various purposes. It is desirable to bond thermoplastic outer layers onto cellular inner cores to form such structures, and it would be desirable to carry out this bonding without the necessity of a secondary adhesive. The structure of the present invention addresses these questions.

U. S. Patent No. 4,557,961 to Gorges discloses a lightweight, fire-retardant structural panel having a honeycomb core with imperforate phenolic impregnated fibrous face sheets attached thereto. Phenolic adhesive films are used between the face sheets and the core to achieve an adhesive bonding therebetween. The present invention requires no such adhesive. Also in Gorges, an outer coating may be applied to at least one of the face sheets. The honeycomb core may be made of aluminum or other materials, including high-strength, high-temperature-resistant aramid structures, such as sold under the trademark Nomex by DuPont.

U. S. Patent No. 4,032,683 to Coale, assigned to the assignee of the present invention, discloses a foamed cellu lar core, as opposed to an expanded honeycomb, coated with polyphenylene sulfide with laminate members bonded thereto. The bonding agent can include the polyphenylene sulfide coating. In one preferred embodiment, the present invention utilizes a polyphenylene sulfide thermoplastic in the outer layers, but coating of the cellular core in the present invention is not necessary.

In addition to the structure itself, it is desirable to have a process which can produce a honeycomb structure substantially continuously. U. S. Patent No. 4,495 021 to Goldsworthy discloses a process in which a rigid honeycomb panel has plastic sheets rolled thereon. A resin matrix is applied with heat to affix the plastic sheets to the panel. The present invention provides a method of producing a composite cellular structure without the necessity of a secondary adhesive such as the resin matrix in Goldsworthy.

### Summary Of The Invention

The composite structure of the present invention comprises a cellular core and a thermoplastic composite layer disposed adjacent to a side of the core and heat-bonded thereto. The cellular core may be described as a means for forming a plurality of compartments and can include a honeycomb configuration. Preferably, a pair of such thermoplastic composite imperforate layers or sheets are used, with one disposed on opposite sides of the core. The layers or sheets are preferably a fiber reinforced thermoplastic resin and can include thermoplastic laminates. The thermoplastic material is preferably a polyarylene sulfide, such as polyphenylene sulfide. The fiber reinforcing therein may include glass, carbon or any other reinforcing materials known in the art.

In one preferred embodiment, the structure further comprises a thermoplastic film disposed between the ther moplastic composite layer and the cellular core. This film is preferably an imperforate unreinforced polyarylene sulfide, such as polyphenylene sulfide.

The cellular core may be made of a variety of materials including but not limited to metal, such as aluminum, or a polyaramid material, such as Nomex.

The present invention also includes a method of forming a cellular sandwich structure comprising the steps of supplying a cellular core portion, positioning a reinforced thermoplastic sheet adjacent to opposite sides of the core portion, and applying heat for thermally bonding the sheets to the core portion. The method may further comprise the step of positioning a layer of thermoplastic film between the sheets and the core.

In the process, the core portion is supplied in a substantially continuous form, and the film is substantially continuously supplied onto the core portion, such as from a roll of material on a mandrel.

Pressure may be applied to the sandwich structure during the step of thermally bonding.

An important object of the invention is to provide a structure which has a thermoplastic composite layer thermally bonded to a cellular core.

Another object of the invention is to provide a composite structure with a cellular core and fiber reinforced thermoplastic sheets on opposite sides thereof with a thermoplastic film between each fiber reinforced sheet and the core.

A further object of the invention is to provide a method of forming a cellular sandwich structure using thermal bonding without a secondary adhesive.

Additional objects and advantages of the invention will become apparent as the following detailed description of the preferred embodiment is read in conjunction with the drawings which illustrate such preferred embodiment.

## Brief Description Of The Drawings

FIG. 1 is an exploded perspective view of the composite cellular sandwich structure of the present invention.

FIG. 2 shows the cellular structure in a perspective view.

FIG. 3 is a schematic showing a process for making a cellular sandwich structure.

## Description Of The Preferred Embodiment

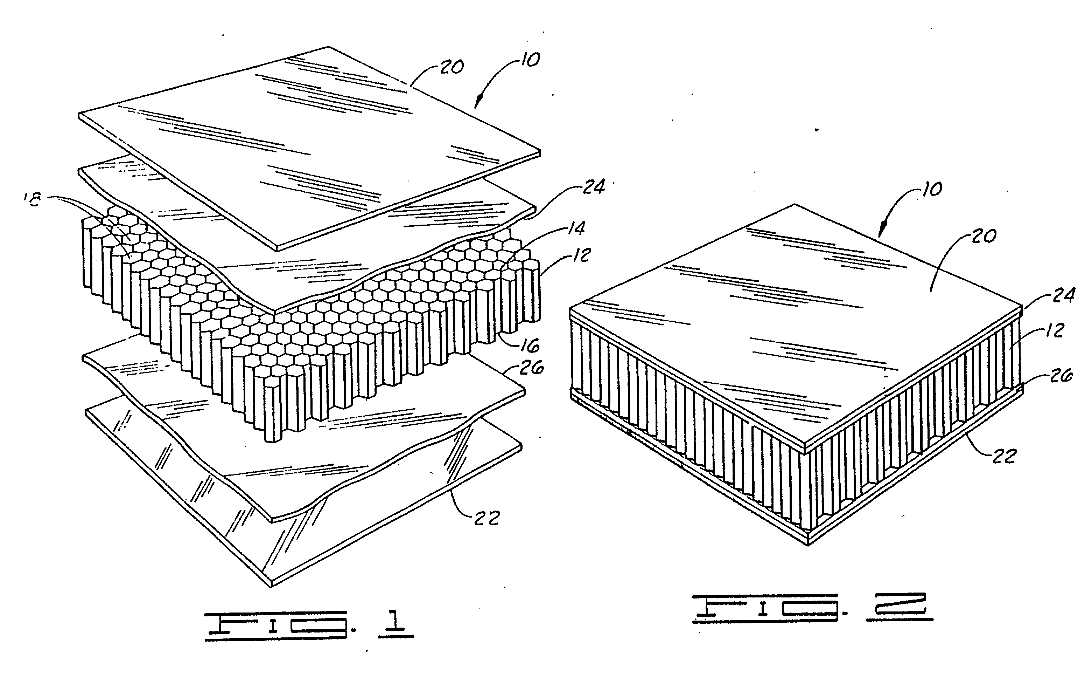

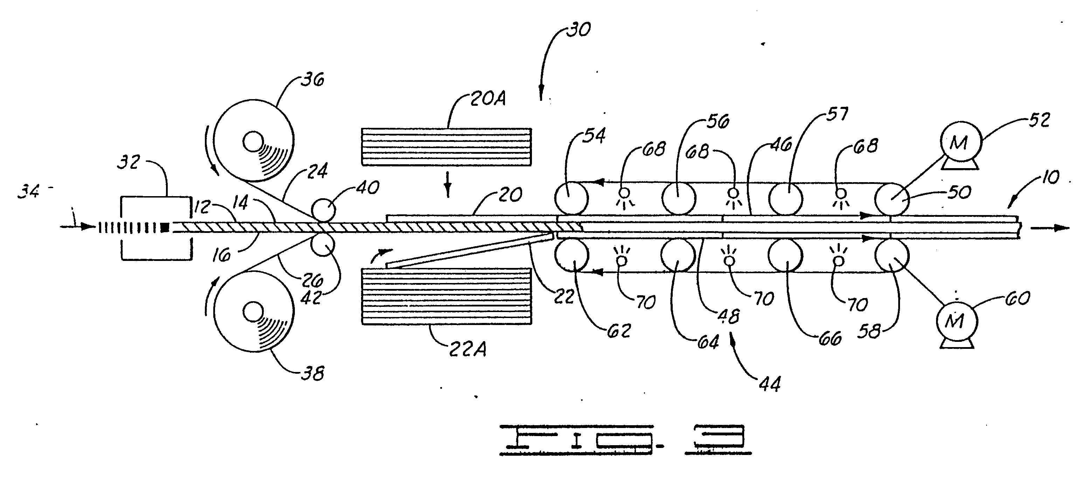

Referring now to the drawings, and more particularly to FIGS. 1 and 2, the composite cellular sandwich structure of the present invention is shown and generally designated by the numeral 10. In FIG. 1, structure 10 is shown in an exploded view, and FIG. 2 illustrates the structure when assembled.

Structure 10 comprises a means for forming or defining a plurality of compartments, and this means may be characterized by a cellular core 12. Core 12 has opposite sides 14 and 16, which, in the embodiment shown in FIGS. 1 and 2, are substantially parallel, although structure 10 is not intended to be limited to such configuration. A plurality of openings or compartments 18 are defined in core 12 and may extend from side 14 to side 16 thereof. In the embodiment shown, openings 18 are substantially perpendicular to sides 14 and 16, but this is not required.

Cellular core 12 may have a substantially honeycomb configuration as illustrated in FIG. 1, but the exact shape and sizes of openings 18 may vary.

Cellular core 12 may be made of any suitable material. For example, a metal core, such as aluminum, may be used. Also, non-metallic materials such as polyaramid materials may be used. In particular, one embodiment has a cellular core 12 made of a Nomex high-strength, high-temperature-resistant aramid structure.

Outer layers or sheets 20 and 22 are preferably disposed on opposite sides of cellular core 12. While two such sheets 20 and 22 are shown for the purposes of this disclosure, a single sheet disposed adjacent to one side of cellular core 12 is also contemplated by the present invention.

Sheets 20 and 22 are each preferably a fiber reinforced thermoplastic composite sheet, including for example a laminate, and the preferred thermoplastic material is a polyarylene sulfide, such as polyphenylene sulfide. The fiber reinforcing material may include glass, carbon or other reinforcing fibers known in the art.

As will be discussed further herein, sheets 20 and 22 are thermally bonded to cellular core 12 by applying heat to the structure. No secondary adhesive is required. However, to facilitate the thermal bonding, a thermoplastic film 24 may be disposed between sheet 20 and core 12, and a similar thermoplastic film 26 may be disposed between sheet 22 and core 12. In this embodiment, the thermoplastic film is also a polyarylene sulfide, such as polyphenylene sulfide, but does not include fiber reinforcement. While tests have shown that thermal bonding may be achieved without the use of thermoplastic film 24 and 26, the use of these films has been shown to improve the bonding of layers 20 and 22 to core 12 in some instances.

Referring now to FIG. 3, one process for producing cellular structure 10 is schematically shown and generally designated by the numeral 30. Cellular core 12 is supplied in a substantially continuous form from a supply means 32, such as a kind for forming an expanded honeycomb. Arrow 34 indicates the direction of motion of cellular core 12 through the process.

Film layers 24 and 26, if being supplied, preferably come from film rolls 36 and 38, respectively, which rotate on mandrels in the direction indicated by the arrows. Rollers 40 and 42 insure that film layers 24 and 26 are brought into contact with sides 14 and 16 of core 12.

In the next step of the process, composite sheets 20 and 22 are brought in contact with core 12, or with film layers 24 and 26, respectively, if the film layers are being used. Sheets 20 and 22 may be supplied from stacks of sheets 20A and 22A, as shown in FIG. 3, which are moved into position in a manner known in the art, or may be supplied in the form of a rolled laminate or the like.

The assembled structure is then passed through a heating and pressure section 44. The structure is run between a pair of belts 46 and 48. In the embodiment shown in FIG. 3, belt 46 is driven by a drive pressure-roller 50 powered by any conventional means such as a motor 52. Idler pressure-rollers 54, 56 and 57 act to guide belt 46. Pressure-rollers 50, 54, 56 and 57 also apply downward pressure to the sandwich structure.

Belt 48 is similarly driven by a drive pressure-roller 58 powered by a motor 60. Belt 48 is guided by idler pressure-rollers 62, 64 and 66. Pressure-rollers 58, 62, 64 and 66 also apply upward pressure on the sandwich structure.

It should be noted that while four rollers have been shown to drive and guide each of belts 46 and 48, the number of rollers may vary as desired.

A means for applying heat to the structure as it passes between belts 46 and 48 is also included in heating and pressure section 44. This heating means may be characterized by a plurality of upper and lower heating elements 68 and 70.

The completed, substantially continuous cellular structure 10 exits the process to the right of FIG. 3. This structure may be cut into various shapes and sizes as necessary for the particular application.

It will be seen, therefore, that the composite cellular sandwich structure of the present invention, along with the disclosed method of manufacture, are well adapted to carry out the ends and advantages mentioned as well as those inherent therein. While a presently preferred embodiment has been shown for the purposes of this disclosure, numerous changes in the arrangement and construction of parts in the structure and steps in the method may be made by those skilled in the art. All such changes are encompassed within the scope and spirit of the appended claims.

## Claims

1. A composite structure comprising:
a cellular core; and
a thermoplastic composite layer disposed adjacent to a side of said core and heat bonded thereto.

2. The structure of claim 1 wherein said core has a honeycomb configuration.

3. The structure of claim 1 wherein said core is aluminum.

4. The structure of claim 1 wherein said core is made of a polyaramid material.

5. The structure of claim 4 wherein said material is a high-strength, high-temperature-resistant aramid structure.

6. The structure of claim 1 wherein said thermoplastic composite layer comprises a fiber reinforced polyarylene sulfide material.

7. The structure of claim 6 wherein said thermoplastic is polyphenylene sulfide.

8. The structure of claim 1 further comprising a thermoplastic film disposed between said composite layer and said core.

9. The structure of claim 8 wherein said film comprises a polyarylene sulfide material.

10. The structure of claim 9 wherein said material is polyphenylene sulfide.

11. A composite structure comprising
a pair of substantially imperforate sheets comprising a thermoplastic resin; and
a means disposed between said sheets for forming a plurality of compartments, said sheets being thermally bonded to said means.

12. The structure of claim 11 wherein said means for forming a plurality of compartments is characterized by a honeycomb core.

13. The structure of claim 12 wherein said core is metal.

14. The structure of claim 12 wherein said core is made of a polyaramid material.

15. The structure of claim 11 wherein said resin is polyarylene sulfide.

16. The structure of claim 11 wherein said resin is fiber reinforced.

17. The structure of claim 16 further comprising a film layer comprising a thermoplastic resin, said layer being disposed between each of said sheets and said means for forming a plurality of compartments.

18. The structure of claim 17 wherein said thermoplastic resin in said film is polyphenylene sulfide.

19. A method of forming a cellular sandwich structure comprising the steps of:
supplying a cellular core portion;
positioning a reinforced thermoplastic sheet adjacent to opposite sides of said core portion; and
applying heat for thermally bonding said thermoplastic sheets to said core portion.

20. The method of claim 19 further comprising the step of, prior to said step of applying heat, positioning a layer of thermoplastic film between at least one of said thermoplastic sheets and said core portion.

21. The method of claim 20 further comprising supplying said thermoplastic in said sheets and said film of polyphenylene sulfide.

22. The method of claim 20 wherein:
said core portion is supplied in a substantially continuous form; and
said layer of film is substantially continuously supplied onto said core portion.

23. The method of claim 19 further comprising the step of applying pressure to said sheets during said step of applying heat for thermally bonding.

24. The method of claim 19 wherein said core is supplied in the form of a honeycomb structure.

25. The method of claim 19 wherein said core is supplied from a material selected from a group comprising aluminum and aramid.

26. The method of claim 19 wherein said thermoplastic sheet is supplied in the form of a fiber reinforced polyphenylene sulfide material.

FIG. 3